# EUROPÄISCHE PATENTSCHRIFT

(11) **EP 1 689 535 B1**
(45) Veröffentlichungstag und Bekanntmachung des Hinweises auf die Patenterteilung: **27.02.2008**
(21) Anmeldenummer: 04819185.2
(22) Anmeldetag: 26.11.2004
(51) Int. Cl.: B05D 3/02, B05D 1/06, B05D 1/12, B05D 1/24

(54) **VERFAHREN ZUR WÄRMEBEHANDLUNG VON AUF SUBSTRATEN APPLIZIERTEN PULVERLACKEN ZUR HERSTELLUNG EINER BESCHICHTUNG AUF DEN SUBSTRATEN UNTER VERWENDUNG VON IR-STRAHLUNG**
METHOD FOR THE THERMAL TREATMENT OF POWDER PAINTS APPLIED TO SUBSTRATES FOR THE PRODUCTION OF A COATING ON THE SUBSTRATES USING IR-RADIATION
PROCEDE DE TRAITEMENT THERMIQUE DE PEINTURES EN POUDRE, APPLIQUEES SUR DES SUBSTRATS, POUR LA PRODUCTION D'UN REVETEMENT SUR CES SUBSTRATS AU MOYEN D'UN RAYONNEMENT INFRAROUGE

(30) Priorität: 26.11.2003 AT 18982003
(43) Veröffentlichungstag der Anmeldung: 16.08.2006
(73) Patentinhaber: TIGER Coatings GmbH & Co. KG, 4600 Wels (AT)
(72) Erfinder: SCHMIDT, Thomas, 4600 Wels (AT); HEMEDINGER, Gerald, 1170 Wien (AT)
(74) Vertreter: Patentanwälte BARGER, PISO & PARTNER
(86) Internationale Anmeldenummer: PCT/AT2004/000418
(87) Internationale Veröffentlichungsnummer: WO 2005/051552

(56) Entgegenhaltungen:
- WO-A-20/04058417
- DE-A1- 10 027 291
- US-A1- 2003 099 782
- US-A1- 2003 148 039

## Beschreibung

Die Erfindung betrifft ein Verfahren zur Wärmebehandlung unter Verwendung von IR-Strahlung von auf Substraten applizierten Pulverlacken beliebigen Farbtons zur Herstellung einer Beschichtung auf diesen Substraten.

Pulverlacke haben aufgrund der hohen Wirtschaftlichkeit des Verfahrens sowie der günstigen Beurteilung aus Sicht des Umweltschutzes bei der Beschichtung von metallischen Untergründen breiteste Anwendung gefunden. Die Pulverbeschichtung von - elektrisch nicht leitenden - Materialien wie Glas oder Keramik wird vielfach praktiziert. Daneben beginnen sich inzwischen auch Anwendungen auf temperatursensiblen Untergründen zu etablieren. Nach den derzeit verfügbaren Verfahren wird jeglicher Pulverlack im Anschluss an seine Applikation durch Erwärmen auf eine Temperatur oberhalb seiner Glasübergangstemperatur zunächst aufgeschmolzen. Gängige Wärmequellen sind beispielsweise Konvektionsöfen oder Infrarotstrahler. Auch Kombinationen aus beiden sind in Verwendung.

Bei wärmehärtbaren Pulverbeschichtungen erfolgt die anschließende Vernetzung durch weitere Wärmezufuhr. Wird die Härtung in einem Konvektionsofen vorgenommen, geschieht das üblicherweise in einem Temperaturbereich von etwa 140-200°C in einem Zeitraum von rund 10 - 30 Minuten. Ein beträchtliches Aufheizen der - gegebenenfalls schweren, große Wärmemengen aufnehmenden - Teile ist dabei nicht zu vermeiden. Daneben machen die aus den genannten Temperaturen und dazu korrespondierenden Einwirkzeiten resultierenden Energielasten diese Wärmequellen zur Pulverbeschichtung hitzeempfindlicher Untergründe wie Holz und holzähnliche Werkstoffe wie medium density fibreboard (MDF), Papier, Kunststoffe, etc., ungeeignet.

Die Härtung von hitzehärtbaren Pulverbeschichtungen mittels IR-Strahlung kann erheblich rascher erfolgen und stellt daher eine Möglichkeit dar, wie die aus der Verwendung von Konvektionsöfen resultierenden Nachteile bzw. Einschränkungen vermieden werden können.

Das besonders kurzwellige NIR (= Near InfraRed) ist gemäß WO 99/41323 A1 in der Lage, die gängigsten Bindemittelsysteme wärmehärtbarer Pulverlacke effizient, das heißt ohne die beschichteten Substrate wesentlich zu erhitzen, zu härten; durch die hohe Energiedichte der verwendeten NIR-Strahlung und ein hinreichendes Adsorptionsverhalten der Bindemittel und mancher Pigmente sind Aushärtungszeiten im Sekundenbereich möglich. Gemäß DE 198 52 268 C1 ist es durch sorgfältige Steuerung der Menge an Bariumsulfat und/oder Aluminiumoxid und/oder Ruß in den Formulierungen möglich, Pulverlacke unterschiedlicher Farbgebung in ihrer Empfänglichkeit für die NIR-Strahlung so aneinander anzugleichen, dass diese Beschichtungsmassen unter gleichartigen Härtungsbedingungen effizient und substratschonend härtbar sind. So beschreibt beispielsweise die WO 99/47276 A1 die Verwendung von IR-Strahlung, welche zumindest anteilig NIR- und/oder kurzwellige IR-Strahlung umfasst, zur Härtung von Pulverlacken auf hitzesensiblen Substraten wie Holz, Holzfaserwerkstoffen, Kunststoff, Gummi, Stoff, Papier oder Karton, wobei Bestrahlungszeiten von 12, vorzugsweise 8 Sekunden nicht überschritten werden. Unter NIR-Strahlung wird in diesem Dokument der Wellenlängenbereich elektromagnetischer Strahlung zwischen dem sichtbaren Bereich und 1,2 µm, unter kurzwelligem IR der Wellenlängenbereich zwischen 1,2 und 2,0 µm verstanden. Die dem vorgenannten Dokument beigefügten Zeichnungsfiguren stellen die Anwendung dieses Härtungsverfahrens auf eine Plattenoberfläche sowie auf den Mantel eines Zylinders dar. In beiden Fällen ist die erforderliche äquidistante Anordnung der Strahler zum zu beschichtenden Objekt möglich, im Falle des Rotationskörpers ist der Strahler achsparallel angeordnet. Die angedeutete Rotation des Zylinders ermöglicht eine gleichmäßige Erwärmung seiner Mantelfläche während des Härtungsprozesses. Verwendet wird im Fall der Platte ein Strahler mit einem Strahlungsflußdichte-Maximum bei etwa 1 µm Wellenlänge, im Fall des Rotationskörpers kommen Halogen-Röhrenstrahler zur Anwendung, was ebenso ein Strahlungsflußdichte-Maximum bei etwa 1 µm Wellenlänge bedeutet. Wenngleich es bei Betrachtung der entsprechenden Spektren korrekt ist, auch in diesen Fällen von IR-Strahlung zu sprechen, welche "zumindest anteilig NIR- und/oder kurzwellige IR-Strahlung umfasst", geben Bestrahlungszeiten von maximal 12, vorzugsweise maximal 8 Sekunden, Auskunft über die ausgesprochene NIR-Betonung des verwendeten Strahlungsspektrums.

Die GB 2 055 619 A bezieht sich ebenfalls auf die Aushärtung von Pulverbeschichtungen auf hitzeempfindlichen, Zellulosefasern enthaltenden Substraten wie Holz oder daraus hergeleiteten Stoffen. Der Offenbarung dieses Dokuments zufolge ist IR-Strahlung im Wellenlängenbereich von 1,0 bis 1,5 µm am Besten zu einer Aushärtung geeignet, ohne die genannten Materialien zu überhitzen. Vom Wellenlängenbereich von 1,5 bis 5,0 µm wird festgestellt, dass er verwendet werden kann und zu guten Resultaten führt.

Für die Leistung der Strahler und deren Abstand von den mit Pulverlack zu beschichtenden Objekten werden bevorzugte Bereiche genannt. Es wird ausgeführt, dass bei zu hoher Strahleneinwirkung die Beschichtungen, bei zu geringer Einwirkung die Substrate thermisch geschädigt werden können (ehe der Pulverlack völlig vernetzt ist).

In der US 2003/0148039 A1 ist ein mehrstufiges Verfahren zur Herstellung von Beschichtungen auf gegebenenfalls grundierten aus Metall, Kunststoff, Holz oder dergleichen bestehenden Substraten unter anderen von Pulverlacken geoffenbart, wobei ein Aufschmelzen mit Heißluft, in Umluftöfen oder mit herkömmlicher IR-Strahlung, gegebenenfalls auch kombiniert mit NIR-Strahlung erfolgen kann, jedoch in einem abschließenden Schritt die Aushärtung mittels NIR-Strahlung mit einem Wellenlängenbereich zwischen 600 und 1400 nm und darauffolgend mit UV- oder Elektronenstrahlung durchgeführt wird. Wenn die zu beschichtenden Werkstücke eine komplexe Form haben, wie z.B. Autoteile, die für eine direkte Bestrahlung nicht zugängliche Bereiche aufweisen, müssen diese entweder punktweise, in Kleinbereichen oder durch Drehen der Werkstücke oder der Strahlenemittoren oder auch stufenweise, z.B. durch mehrmalige Strahlungseinwirkung gehärtet werden. Die US 2003/00997.82 A1 offenbart ein sehr ähnliches Beschichtungsverfahren wie vorstehend genannte US-A1 unter Verwendung von Pulverlackdisperionen (Pulverslurry).

Die DE 100 27 291 A1 offenbart farb- und/oder effektgebende Ein- oder Mehrbeschichtungen für metallische Substrate auf der Basis von Eisen unter Verwendung eines Pulverslurry-Auftrages, der mindestens ein hydrophiles Farb- und/oder Effektpigment enthält. Die Pulverslurryschicht(en) wird (werden) physikalisch oder thermisch und/oder mit aktinischer Strahlung gehärtet. Unter aktinischer Strahlung sind offenbarungsgemäß elektromagnetische Strahlung, wie NIR-Strahlung, sichtbares Licht, UV- Strahlung oder Röntgenstrahlung sowie Korpuskularstrahlung, wie Elektronenstrahlung zu subsummieren. Die thermische Härtung erfolgt beispielsweise durch Erhitzen in einem Umluftofen.

Die im Prioritätsintervall veröffentlichte WO 2004/058417 A offenbart die Beschichtung der Oberfläche eines leitenden oder nichtleitenden Substrats mit Hoch-Energie-Strahlung mit einer Wellenlänge im Bereich von 250 bis 2500 nm absorbierenden Materialien, worauf eine Pulverlackbeschichtung erfolgt, wobei der Pulverlack ebenso wie entsprechend D1 bis D3 mittels NIR-Strahlung geschmolzen und gehärtet wird.

Allen vorbeschriebenen, mit IR-Strahlung arbeitenden Verfahren liegt zugrunde, dass bei sachgemäßer Durchführung die Aushärtung thermoreaktiver Pulverbeschichtungen durch die hohe Energiedichte der verwendeten Strahlung so kurzzeitig erfolgt, dass sie abgeschlossen ist, ehe das Substrat von beträchtlicher oder sogar unzuträglicher Erhitzung erreicht wird. Gerade die zur Erzeugung von NIR-Strahlung benötigten Anlagen erfordern allerdings außerordentlich hohe Anschlussleistungen und verursachen sehr hohe Energiekosten, was diese Verfahren und die dafür dienenden Anlagen sehr aufwändig macht.

Es stellte sich allerdings heraus, dass die auf IR-Strahlung, insbesondere NIRbasierenden Härtungsverfahren zum Aushärten von Pulverlacken auf Gegenständen impraktikabel sind, sobald anstelle planer Oberflächen profilierte beschichtet werden sollen. Liegen die Aushärtungszeiten im Sekundenbereich, setzt dies einen definierten Abstand zwischen Strahler und Objekt sowie eine äußerst genaue Dosierung der angewendeten Strahlung (Dauer und Intensität) voraus. Unterschiedliche Entfernungen einzelner Objektpartien vom Strahler führen zu erheblich unterschiedlicher Wärmeeinwirkung an denselben. Entsprechendes gilt, wenn ein Teil des Objektes beispielsweise plan und senkrecht zur Einstrahlung der NIR-Strahlung orientiert ist, eingefräste Profilierungen - z. B. an Türen oder Möbelfronten - jedoch Bereiche mit einer von der Normalen abweichende Orientierung zur Strahlung aufweisen. Bei derartiger Objektgeometrie ist mittels IR-Strahlung, insbesondere NIR-Strahlung an den ungünstig zur Strahlung orientierten Bereichen der Oberfläche keine ausreichende Härtung des Pulverlackes zu erzielen, ohne an den klar exponierten Bereichen - besonders im Falle von Untergründen mit geringer Wärmeleitfähigkeit wie Glas oder Keramik - die Beschichtungsmasse und im Falle eines hitzeempfindlichen Untergrunds wie Holz oder holzähnliche Werkstoffe, Karton oder Kunststoff, auch diesen thermisch zu schädigen und/oder am dort applizierten Pulverlack Störungen durch Ausgasen von Feuchtigkeit aus natürlichen Werkstoffen wie Holz und den daraus abgeleiteten Produkten wie MDF, Papier oder Karton hervorzurufen.

Unter Substraten geringer Wärmeleitfähigkeit werden beispielsweise solche thermisch isolierende Materialien verstanden, deren Wärmeleitfähigkeit zwischen 0,05 und 5 W/mK liegt. So ist beispielsweise die Wärmeleitfähigkeit von MDF bei 0,07 W/mK, von Holz (Eiche) bei 0,16 W/mK und Glas zwischen 0,6 und 1,8 W/mK.

Es sind zwar Verfahren bekannt, wie zum Beispiel in AT 402 265 B beschrieben, bei denen hitzeempfindliche Untergründe wie Holz oder Holzfaserwerkstoffe vor der Pulverbeschichtung mit einer flüssigen Grundierung, die eine Wärmebarriere zu ihrem Untergrund darstellt, versehen werden. Nachteilig ist hierbei in jedem Fall, dass dies einen weiteren Arbeitsschritt erfordert. Darüber hinaus sind Trocknungszeiten einzuhalten, was Lagerkapazität für zu trocknendes Gut erfordert. Kommen organische Lösungsmittel zum Einsatz, kommt noch die Umweltthematik hinzu, weiters die Kosten für diese Lösungsmittel. Zusammengefasst ist es als inkonsequent zu bezeichnen, dem vorteilhaften Einsatz von Pulverbeschichtungen eine Flüssigbeschichtung voranzustellen, deren Anwendung genau die Vorteile von Pulverlack vermissen lässt.

UV-härtbare Pulverbeschichtungen hingegen werden nach ihrem zuvor erfolgten Aufschmelzen unter Anwendung ultravioletter Strahlung vernetzt. Dieses Aufschmelzen nach erfolgter Applikation erzeugt aus dem puderigen Auftrag eine zusammenhängende Flüssigphase, in welcher dann, durch UV-Strahlung ausgelöst, die Vernetzung der Pulverlack-Bindemittel vorgenommen wird. Generell unterliegen Gegenstände, welche mit UV-härtbaren Pulverlacken beschichtet werden, im Vergleich zu wärmehärtbaren Pulverlacken einer geringeren Temperaturbelastung. Dennoch können auch diese geringeren Temperaturbelastungen bei manchen Materialen zu Problemen führen, beispielsweise bei Formkörpern aus Thermoplasten, bei welchen die längere Einwirkung von Temperaturen um oder über 100°C bereits zu Verformungen führen kann.

Daneben werden auch Pulverlackformulierungen beschrieben, welche nach dem so genannten ,dual cure'-Verfahren, einem Härtungsverfahren unter Anwendung von Wärme und UV- Strahlung, härtbar sind, wie beispielsweise in der EP 0 844 286 B1. Auch hier begrenzt die unvermeidbare Erhitzung der Objekte nach dem derzeitigen Stand der Technik die Anwendbarkeit solcherart zu härtender Pulverlacke auf profilierten, insbesondere temperatursensiblen Gegenständen.

Die EP 0 795 565 B1 beschreibt flüssige, lösungsmittelhaltige Harzzusammensetzungen, die den Wärme-Anteil der Sonnenstrahlung blockieren, polymerisierbares (Meth-)Acrylat, das über eine (Meth-)Acryloylgruppe verfügt, enthalten und die durch die Anwendung von UV- oder Elektronenstrahlen härtbar sind. Dieses Dokument offenbart auch Sonnenstrahlung absorbierende Partikel anorganischer Metallverbindungen von einer primären Partikelfeinheit von 0,5 µm oder weniger enthalten. Die genannte EP-B1 offenbart auch die Verwendung solcher Harzzusammensetzungen zur Herstellung von kratzfesten Überzügen auf Folien etc. Als Beispiele für jene anorganischen Metallverbindungen werden Vanadiumoxid, Zinnoxid, ATO (antimondotiertes Zinnoxid), ITO (indiumdotiertes Zinnoxid) und Zinlcantimonat-Anhydrid geoffenbart.

Der Lehre des vorgenannten Dokuments zufolge sind keine Partikel geoffenbart, welche über den gesamten IR-Spektralbereich absorbieren. Vielmehr wird es als vorteilhaft bezeichnet, die vorgenannten Partikel mit IR-absorbierenden organischen Verbindungen wie speziellen Amino- oder Phthalocyaninverbindungen, deren Absorption andere Bereiche des IR-Spektrums abdeckt, zu kombinieren.

Der Erfindung liegt somit die Aufgabe zugrunde, ein Verfahren zur Wärmebehandlung von Pulverlacken beliebigen Farbtons zur Herstellung einer Beschichtung beliebiger Substrate unter Verzicht auf eine als Wärmebarriere wirkende Flüssigbeschichtung bereitzustellen, mittels welchem eine mit Wärmeverlusten verbundene Erhitzung jener Substrate weitestgehend vermieden wird. Aufgabe der Erfindung ist überdies die Schaffung eines Verfahrens, das auch die Beschichtung von Substraten mit profilierter Oberfläche - die ggf. schlecht die Wärme leitend wie beispielsweise Glas oder Keramik und/oder hitzeempfindlich wie Holz, Holzfaserwerkstoff, Papier, Karton, Kunststoff, Gummi oder Stoff sein können - erlaubt, ohne die Substrate und/oder die Beschichtungsmassen zu schädigen, sei es durch Zersetzung und/oder Deformation, und das zu einer gleichmäßigen, störungsfreien, gehärteten und gut haftenden Lackschicht führt. Eine weitere Aufgabe der Erfindung ist es, ein Verfahren zur Wärmebehandlung von Pulverlacken beliebigen Farbtons zur Herstellung einer Beschichtung von beliebigen Substraten bereitzustellen, welches ohne die hohen elektrischen Anschlussleistungen und damit verbundenen erforderlichen Anlagen, wie sie von der NIR-Technologie erfordert werden, auskommt.

Die Aufgabe zur Bereitstellung einer entsprechenden Methode wird durch ein Verfahren gelöst, das erfindungsgemäß dadurch gekennzeichnet ist, dass der auf dem Substrat applizierte Pulverlack mit mittel- und/oder langwelliger IR-Strahlung mit einem Wellenlängenbereich von 2 bis 12 µm bestrahlt wird und dass der Pulverlack Additive mit der Eigenschaft, mittel- und/oder langwellige IR-Strahlung zu absorbieren, enthält und dass gegebenenfalls der mit mittel- und/oder langwelliger IR-Strahlung wärmebehandelte Pulverlack einer weiteren Behandlung mit Elektronen- oder UV-Strahlung unterworfen wird.

Bei Verwendung von elektrischen Strahlern mit stabförmigen Heizelementen wird mit einer Leistung von 5 bis 80 W/cm, vorzugsweise 20 bis 50 W/cm gearbeitet. Bei Verwendung von gaskatalytischen Strahlern wird mit einer Leistung zwischen 1,0 und 6, vorzugsweise 2 bis 4 W/cm² gearbeitet.

Weitere Ausführungsformen und Ausgestaltungen des erfindungsgemäßen Verfahrens sind der Beschreibung und den Unteransprüchen zu entnehmen.

Überraschend hat sich gezeigt, dass völlig oder teilweise hitzehärtbare Pulverlackierungen beliebiger Farbgebung auf beliebigen Objekten, insbesondere schlecht die Wärme leitenden mit einer Wärmeleitfähigkeit zwischen 0,05 und 5 W/mK) und/oder hitzeempfindlichen Objekten und ganz bevorzugt Objekten mit profilierter Oberfläche dann in allen Teilen vollständig und effizient, das heißt ohne nennenswerte Erhitzung der Objekte selbst, und damit ohne jeden Schaden für die Beschichtung und/oder das Substrat, unter Verwendung mittel- bis langwelliger Infrarot-Strahlung, deren Strahlungsflussdichte-Maximum bei Wellenlängen oberhalb 2,0 µm als Energiequelle ausgehärtet werden können, wenn die Pulverlacke Stoffe mit der Eigenschaft, mittel- und/oder langwellige IR-Strahlung zu absorbieren, enthalten. Die so erzielten Lackoberflächen sind fehlerfrei und weisen auch keine Anzeichen von Ausgasungen aufgrund von Feuchteabgabe oder thermischer Zersetzung des Untergrundes auf, welche sich als Oberflächenstörungen der Pulverbeschichtung - so genannte ,Nadelstiche' - darstellen, auf. Daneben konnte beobachtet werden, dass UVsowie elektronenstrahlhärtbare Pulverlacke mit entsprechenden, im mittel- bis langwelligen IR-Bereich absorbierenden Additiven versehen, unter Verwendung der genannten Strahlungsart bei einer Strahlungsintensität, welche bei Pulverlacken ohne entsprechenden Additiv-Zusatz bloß ein Zusammensintern der Pulverpartikel bewirken, zuverlässig aufschmelzen und verfilmen. Dieser so aufgeschmolzene, in Flüssigphase befindliche Pulverlack wird dann zu seiner Aushärtung einer UV- oder Elektronen-Strahlung unterworfen.

Als sehr erfolgreich für eine effiziente, den profilierten MDF-Untergrund schonende Aushärtung mit Hilfe mittel- und langweiliger IR-Strahlung erwies sich beispielsweise die Mitverwendung von Antimon-Zinn-Oxid (Minatec® 230 A-IR der Fa. Merck) in den betreffenden Pulverlackformulierungen. Weiters zeigten Indium-Zinn-Oxid (Nano® ITO der Fa. Nanogate Technologies GmbH, Saarbrücken, D) und C-Nanotubes (Fa. Nanoledge, Montpellier, F) sowie C-Nanofibres (Fa. Electrovac GesmbH, Klostemeuburg, A) hervorragende Effizienz.

Als weitere Stoffklasse mit im Sinne der vorliegenden Erfindung hoher Wirksamkeit sind die Oxide der Seltenerdmetalle zu nennen. Sowohl in jeweils reiner Form, in Form von Mischungen der einzelner Reinstoffe wie auch als Oxide der entsprechenden Seltenerdmetall-Mischungen zeigen sie deutlich ausgeprägte Wirkung.

Mittel- und/oder langwellige IR-Strahlung absorbierende Wirksamkeit im Sinne der vorliegenden Erfindung zeigten weiters organische Stoffe mit einem hohen Anteil an Hydroxylgruppen, der mindestens 0,5 Hydroxylgruppen pro C-Atom beträgt. Derartige organische Stoffe sind beispielsweise Polyalkohole wie Pentaerythrit, Di-pentaeryrthrit.

Die erforderliche Zusatzmenge, bezogen auf den Pulverlack, hängt sowohl vom im mittel- bis langwelligen IR-Bereich absorbierenden Stoff, dem Energiebedarf des verwendeten Pulverlacksystems zu seinem Aufschmelzen resp. seiner Härtung, der Hitzeempfindlichkeit des zu beschichtenden Substrates und dem Emissionsspektrum der verwendeten Strahlungsquelle ab.

Bei Verwendung eines mit elektrischer Energie betriebenen mittelwelligen IR-Strahlers (Fa. Heraeus) zeigten Zusätze von Nano® ITO, C-Nanofibres und C-Nanotubes im Bereich von 0,01%, bezogen auf die Pulverlack-Gesamtformulierung, hervorragende Wirksamkeit hinsichtlich der Aushärtung derartiger Formulierungen, während die nicht modifizierten Zusammensetzungen derartiger Pulverlacke unter diesen Umständen gar nicht aushärten. Die mit Gas als Energieträger, welches katalytisch oxidiert wird, betriebenen Strahler (Fa. Infragas Nova Impianti, I; Fa. Vulcan catalytic, USA) emittieren vorzugsweise im Wellenlängenbereich von 2-12 µm. Verglichen mit elektrischen Strahlern zeichnen sie sich durch sehr niedrige Betriebskosten aus. Sie sind insbesondere dann zur schonenden Aushärtung von Pulverbeschichtungen an profilierten Oberflächen von Objekten aus hitzeempfindlichen Werkstoffen geeignet, wenn die betreffenden Formulierungen beispielsweise 2,5% Ytterbiumoxid und 2,5% Neodymoxid enthalten. Denselben Zweck erfüllt ein Zusatz von 1 - 5 % Minatec ® 230 A-IR. Selbstverständlich ist es möglich, Pulverlacke durch die kombinierte Verwendung entsprechender Zusatzstoffe derart auszurüsten, dass sie zur erfindungsgemäßen Aushärtung mit unterschiedlichen Strahlungsquellen für mittel- und/oder langwellige IR-Strahlung geeignet sind.

Die vorgenannten Additive mit der Eigenschaft, mittel- und/oder langwellige IR-Strahlung zu absorbieren, sind einzeln ebenso wie in Kombination miteinander bei der Wärmebehandlung von auf Substraten applizierbaren Pulverlacken einsetzbar.

Aufgrund der - im Vergleich zu auf NIR und/oder kurzwelligem IR beruhenden Verfahren - wesentlich geringeren Energiedichte der verwendeten mittel- und/oder langwelligen IR-Strahlung liegen die Härtungszeiten für die mit den entsprechenden Absorbern ausgestatteten Pulverlacke auf temperatursensiblen Substraten im Minutenbereich, z. B. 1 - 5 Minuten, und nicht - wie dort - im Sekundenbereich. Da die mittel- und langwellige Strahlung, insbesondere jene, welche mit gaskatalytischen Strahlern erzeugt wird, überwiegend diffusen Charakter aufweist, wird sie den Ansprüchen zur Aushärtung profilierter Oberflächen temperatursensibler Substrate wesentlich besser gerecht als die im wesentlichen als fokussiert zu bezeichnende NIR- und kurzwellige IR-Strahlung. Die Dotierung der Pulverlacke mit den Absorbern für mittel- und/oder langwelliges IR bringt es mit sich, dass die Beschichtungen die Strahlung bevorzugt aufnehmen, dabei rasch schmelzen und gegebenenfalls härten.

Zur Herstellung der nach dem erfindungsgemäßen Verfahren hitzehärtbaren Pulverlackformulierungen können grundsätzlich alle zur Herstellung hitzehärtbarer Pulverlacke gängigen Bindemitelsysteme verwendet werden, wie beispielsweise Polyester, Polyurethane, Polyester-Epoxy-Hybride, Polyester-Polyacrylat-Hybride, reine Epoxide auf der Basis von Bsiphenol A bzw. epoxidierten Phenol-Novolaken, Epoxy-Polyacrylat-Hybride, reine Polyacrylate, etc. Als Härter der vorgenannten Polymeren sind Stoffe wie Triglycidylisocyanurat, Diglycidylterephthalat pur oder in Kombination mit Trigylcidyltrimellitat, Isocyanathärter auf der Basis von Diisocyanataddukten, -di- oder -trimeren, welche ggf. durch Verwendung abspaltbarer Blockierungsmittel wie beispielsweise ε-Caprolactam an einer vorzeitigen Reaktion gehindert werden, Glycoluril (Powderlink® 1174 der Fa. Cytec Industries Inc.), β-Hydroxyalkylamide, Imidazole und deren Epoxid- Addukte, Imidazoline und deren Epoxid-Addukte, Polyamine und deren Epoxid-Addukte, Dicyandiamid, Novolake, Dodecandisäure, Dodecandisäure-Polyanhydrid, etc. geeignet.

Pulverlacke zur Härtung nach dem erfindungsgemäßen Verfahren können mit allen bekannten Pigmenten versetzt werden, beispielsweise Titandioxid, Ruß, Eisenoxiden, Chrom(III)oxid, Ultramarinblau, Phthalocyaninblau und -grün. Ebenso ist die Verwendung von Effektpigmenten, beispielsweise auf der Basis Aluminium-, Messing- und Kupferplättchen möglich, weiters mineralische Effektbildner wie beispielsweise Glimmer oder Eisenglimmer.

Als Füllstoffe können beispielsweise Schwerspat, Calcit, Dolomit, Quarz, Wollastonit, Aluminiumhydroxid, Kaolin, Talk zur Anwendung kommen.

Daneben können die nach dem erfindungsgemäßen Verfahren hitzehärtbaren Pulverlacke beispielsweise Additive zum Entgasen (z.B. Benzoin, Amidwachse), Verlaufsmittel (z.B. Polyacrylate), Aushärtungsbeschleuniger (beispielsweise tertiäre Amine, Imidazole, Imidazoline, quartäre Ammonium- und/oder Phosphoniumsalze, Organozinnverbindungen, Zinnseifen, Lithiumseifen, Sulfonsäure und deren Salze), Lichtschutzmittel [UV-Absorber, HALS- Verbindungen (=hindred amine light stabiliser)], Triboadditive (tertiäre Amine, HALS-Verbindungen), Wachse, Polymerpartikel, wie Teflon, Polyamid, Polyethylen, Polypropylen, als Strukturierungsmittel und/oder zur Steigerung der Kratzfestigkeit enthalten.

Die Herstellung der Pulverlacke, welche die IR-absorbiemden Stoffe enthalten, erfolgt nach der gängigsten Methode durch Extrusion einer innigen Trockenmischung der verwendeten Pulverlackcrohstoffe, Vermahlung des Extrudates und anschließende Siebung. Anstelle des Schmelzprozesses im Extruder können auch Löseprozesse zum Zwecke der stofflichen Homogenisierung der Pulverlackbestandteile herangezogen werden. Die Gewinnung des Beschichtungspulvers kann bei Verwendung eines Lösemittels durch Sprühtrocknung vorgenommen werden. Wird anstelle eines Lösemittels überkritisches Gas, z. B. überkritisches Kohlendioxid, verwendet, kann auf den Verfahrensschritt der klassischen Sprühtrocknung verzichtet werden, es genügt in diesem Fall, die erhaltene Mischung über eine Düse auf Normalbedingungen zu expandieren.

Die Applikation der für das erfindungsgemäße Verfahren geeigneten Pulverlacke auf die zu beschichtenden Objekte erfolgt durch Versprühen der Pulverlackpartikel unter gleichzeitiger elektrostatischer oder tribostatischer Aufladung. Sonderformen dieser Applikationsformen sind beispielsweise die Aufbringung durch den EMB®-Prozeß (electromagnetic brush method) oder durch das so genannte Powder-Cloud-Verfahren.

Nach erfolgter Aufbringung des pulverigen Beschichtungsmaterials auf nicht abwickelbare dreidimensionale Objekte aus hitzeempfindlichen Werkstoffe kann dieses dann erfindungsgemäß mit Hilfe der mittel- bis langwelliger IR-Strahlung mit einem Wellenlängenbereich von 2 bis 12 µm in allen Bereichen dieser Objekte und ohne diese zu schädigen aufgeschmolzen und einwandfrei gehärtet werden.

Die nachfolgenden Beispiele sollen den Nutzen der Erfindung detaillierter darstellen, ohne sie auf hier beschriebenen Ausführungen zu beschränken.

Wärmebehandlung von hitzehärtbaren Pulverlacken

| Rohstoff | Formulierung Nr. | | | | | | | | |
|---|---|---|---|---|---|---|---|---|---|
| | V1 | 1 | 2 | 3 | 4 | 5 | 6 | 7 | 8 |
| Crylcoat 7207 | 383,0 | 382,9 | 382,9 | 382,4 | 382,9 | 357,0 | 378,0 | 357,0 | 382,8 |
| Araldit GT 6063 | 340,7 | 340,7 | 340,7 | 340,3 | 340,7 | 316,7 | 335,7 | 316,7 | 340,7 |
| Reafree C4705-10 | 25,0 | 25,0 | 25,0 | 25,0 | 25,0 | 25,0 | 25,0 | 25,0 | 25,0 |
| Dyhard MI-C | 3,7 | 3,7 | 3,7 | 3,7 | 3,7 | 3,7 | 3,7 | 3,7 | 3,7 |
| Lanco Wax TF 1830 | 15,0 | 15,0 | 15,0 | 15,0 | 15,0 | 15,0 | 15,0 | 15,0 | 15,0 |
| Tinuvin 144 | 2,0 | 2,0 | 2,0 | 2,0 | 2,0 | 2,0 | 2,0 | 2,0 | 2,0 |
| Bayferrox 3920 | 2,6 | 2,6 | 2,6 | 2,6 | 2,6 | 2,6 | 2,6 | 2,6 | 2,6 |
| Titan Tiona RCL 696 | 197,6 | 197,6 | 197,6 | 197,6 | 197,6 | 197,6 | 197,6 | 197,6 | 197,6 |
| China Clay Extra St Gema | 30,0 | 30,0 | 30,0 | 30,0 | 30,0 | 30,0 | 30,0 | 30,0 | 30,0 |
| Nano-ITO | -- | 0,1 | -- | -- | -- | -- | -- | -- | 0,2 |
| C-Nanofibres | -- | -- | 0,1 | 1,0 | -- | -- | -- | -- | -- |
| C-Nanotubes | -- | -- | -- | -- | 0,1 | -- | -- | -- | -- |
| Ytterbium Oxid | -- | -- | -- | -- | -- | 25,0 | -- | -- | -- |
| Neodymium Oxid | -- | -- | -- | -- | -- | 25,0 | -- | -- | -- |
| Minatec 230 A-IR | -- | -- | -- | -- | -- | -- | 10,0 | 50,0 | -- |

### Zahlenangaben: Rohstoffmengen in Gramm

Die Ansätze der obigen Formulierungen V 1 (Vergleichsbeispiel 1) sowie 1- 10 (Beispiele, erfindungsgemäß) werden in einem Labormischer Prism Pilot 3 eine Minute lang bei 1500 U/min. gemischt und anschließend auf einem Laborextruder der Type Theysohn TSK PCE 20/24D (Zonentemperaturen 40/60/80/80°C) bei 400 U/min. extrudiert. Anschließend werden die erhaltenen Extrudate auf eine Kornfeinheit < 100 µm gemahlen.

Die so erhaltenen Pulverlacke werden mit einer Gema Easy Tronic Beschichtungsanlage auf Möbelladenfronten aus MDF mit markanter Profilierung appliziert (finale Schichtdicke ca. 80 µm) und anschließend einer Wärmebehandlung zur Aushärtung durch mittel- bis langwellige IR-Strahlung mit einem Strahlungsflussdichte-Maximum > 2 µm Wellenlänge zugeführt. Für diesen Zweck stehen zwei IR-Einbrenn-Anlagen zur Verfügung:

### A) elektrisch betrieben:

Über die Länge verteilt sind 4 Strahler der Fa. Heraeus (2 Carbonstrahler Mittelwelle, 2 herkömmliche Strahler Mittelwelle, beide mit einer maximalen Strahlertemperatur < 1000°C, somit Strahlungsflussdichte-Maximum > 2 µm Wellenlänge) quer zur Förderrichtung angebracht. Die Strahler werden für die Versuche mit 60% ihrer Maximalleistung betrieben, wodurch sich die emittierte Strahlung weiter in den längerwelligen Bereich verschiebt. Die Bandgeschwindigkeit wird so gewählt, dass die Proben die Härtungsstrecke in ungefähr 3,5 Minuten passieren. Für die ersten 30 Sekunden liegt die Oberflächentemperatur bei ca. 100°C, danach bei durchschnittlich 135°C.

### B) gaskatalytisch betrieben:

Eine rund 10 m lange Härtungsstrecke ist mit gaskatalytischen IR-Strahlern der Fa. Vulkan versehen. Nach Angaben des Herstellers beträgt das Strahlungsflussdichte-Maximum bei einer Strahlertemperatur von 400°C bei ca. 4,5 µm, bei einer Strahlertemperatur von 530°C bei ca. 3 µm. Die Strahlerleistung wird für die Versuche so eingestellt, dass eine unbeschichtete MDF-Platte bei einem 4,5 Minuten dauernden Durchlauf durch die Anlage keine Veränderungen erkennen lässt.

Versuchsergebnisse zur Aushärtung der Pulverlackformulierungen (Ermittlung der Beständigkeit gegen Methylethylketon):

| Versuchs-Nummer | Chemikalienbeständigkeit [min] | |
|---|---|---|
| | Anlage A (elektrisch) | Anlage B (gaskatalytisch) |
| V 1 | <1 | 4-5 |
| 1 | 9 | 4-5 |
| 2 | >10 | 4-5 |
| 3 | >10 | >10 |
| 4 | 9 | 4-5 |
| 5 | 1 | 10 |
| 6 | 2 | 9 |
| 7 | >10 | >10 |
| 8 | >10 | 8-9 |

Das Merkmal der Chemikalienbeständigkeit dient zur Beurteilung der durch das Einbrennen erzielten Vernetzungsdichte des Pulverlackes.

Durchführung: auf die zu prüfende Fläche wird bei Raumtemperatur Methylethylketon aufgetropft und die Zeit in Minuten gemessen, nach welcher der Lack mit einem Zellstoff-Tuch unter mäßigem Druck ggf. zumindest teilweise vom Untergrund weggewischt werden kann. Widersteht der Pulverlack dem Lösungsmittel 10 Minuten lang, wird der Test beendet, die Prüfung gilt als bestanden.

Beim nicht erfindungsgemäßen Vergleichsbeispiel V (ohne Absorber-Zusatz) wird durch die Wärmebehandlung in der elektrischen Anlage keinerlei Härtung erzielt (der Pulverlack lässt sich abwaschen), in der gaskatalytischen Anlage ist die Härtung dieses Pulverlackes jedenfalls klar unzureichend.

Die vorstehenden erfindungsgemäßen Beispiele 1 - 8 zeigen an den planen wie an den profilierten Teilen der Prüfkörper, dass mit den gewählten Dotierungen an IR-Absörbern, welche im mittel- und/oder langwelligen IR-Bereich absorbieren, bei zumindest einer der verwendeten Einbrenn-Anlagen gute bis vollständige Aushärtung der betreffenden Pulverlacke erzielt werden kann.

Wärmebehandlung von UV-härtbaren Pulverlacken

| Rohstoff | Formulierung Nr. | |
|---|---|---|
| | V2 | 9 |
| Uvecoat 3000 | 670,0 | 660,0 |
| Irgacure 819 | 23,0 | 23,0 |
| Irgacure 2959 | 4,0 | 4,0 |
| Resiflow PV 88 100% | 15,0 | 15,0 |
| Tinuvin 144 | 3,0 | 3,0 |
| Titan 2160 | 200,0 | 200,0 |
| Sachtleben Micro | 55,0 | 45,0 |
| Martinal OL 104 | 30,0 | 20,0 |
| Minatec 230 A-IR | -- | 30,0 |

### Zahlenangaben: Rohstoffmengen in Gramm

Die Ansätze der obigen Formulierungen V 2 (Vergleichsbeispiel 2) sowie 11 (Beispiel, erfindungsgemäß) werden, wie schon zuvor beschrieben, in einem Labormischer Prism Pilot 3 eine Minute lang bei 1500 U/min. gemischt und anschließend auf einem Laborextrüder der Type Theysohn TSK PCE 20/24D (Zonentemperaturen 40/60/80/80°C) bei 400 U/min. extrudiert. Anschließend werden die erhaltenen Extrudate auf eine Kornfeinheit < 100 µm gemahlen.

Die so erhaltenen Pulverlacke werden mit einer Gema Easy Tronic Beschichtungsanlage auf Möbelladenfronten aus MDF mit markanter Profilierung appliziert und anschließend einer Wärmebehandlung durch die zuvor beschriebene Anlage A zugeführt. Die Strahler werden für diese Versuche mit 50% ihrer Maximalleistung betrieben, die Bandgeschwindigkeit wird so gewählt, dass die Proben die Behandlungsstrecke in ungefähr 2 Minuten passieren.

Eine visuelle Beurteilung der mit den Beschichtungspulvern versehenen Probanden ergibt bei Formulierung Nr. 11 (erfindungsgemäß) eine in allen Bereichen durchgehend geschmolzene, homogen verlaufende Lackschicht, welche problemlos UV-härtbar ist, bei Formulierung Nr. V 2 (nicht erfindungsgemäß) eine in den Profilbereichen nur ansatzweise geschmolzene Schicht, welche die einzelnen Pulverkörner noch erkennen lässt. An Pulverlack in solchem Zustand lässt sich eine UV-Härtung nicht durchführen.

Ermittlung der Oberflächentemperaturen an pulverbeschichteten MDF-Teilen während des Durchlaufs durch Anlage A:

Zwei gleichartige MDF-Prüfplatten werden an ihrer Oberfläche mit jeweils einem Temperaturfühler versehen und die eine mit der Vergleichsformulierung V 1, die andere mit der Formulierung aus Beispiel 7 versehen. Anschließend werden die beiden Prüfplatten mit gleicher Geschwindigkeit durch die die konstant betriebene Einbrennanlage A gefahren und die resultierenden Oberflächentemperaturen mit Hilfe des Mess- und Registriergerätes DataPaq 11 aufgezeichnet. Dabei zeigte sich, dass die aus Formulierung 7 hergestellte Beschichtung durchgängig eine um ca. 20 +/-5°C höhere Temperatur als jene aus Formulierung V hergestellte aufwies.

Diese Messung belegt eindrucksvoll, wie eine ausreichend moderate Strahlungsintensität an mittel- bis langwelliger IR-Strahlung, welche Teile aus MDF nicht zu schädigen - und Pulverlack nicht zu härten vermag - , unter Verwendung eines entsprechenden Absorbers im Pulverlack zur völligen Aushärtung desselben führt.

## Patentansprüche

1. Verfahren zur Wärmebehandlung von auf Substraten applizierten Pulverlacken beliebigen Farbtons zur Herstellung einer Beschichtung auf den Substraten unter Verwendung von IR-Strahlung, **dadurch gekennzeichnet, dass** der auf dem Substrat applizierte Pulverlack mit mittel- und/oder langwelliger IR-Strahlung mit einem Wellenlängenbereich von 2 bis 12 µm bestrahlt wird und dass der Pulverlack Additive mit der Eigenschaft, die mittel- und/oder langwellige IR-Strahlung zu absorbieren, enthält und dass gegebenenfalls der mit mittel- und/oder langwelliger IR-Strahlung wärmebehandelte Pulverlack einer weiteren Behandlung mit Elektronen- oder UV-Strahlung unterworfen wird.

2. Verfahren nach Anspruch 1, **dadurch gekennzeichnet, dass** die mittel- und/oder langwellige IR-Strahlung ein Strahlungsflussdichte-Maximum bei Wellenlängen > 2,0 µm aufweist.

3. Verfahren nach Anspruch 2, **dadurch gekennzeichnet, dass** das Strahlungsflussdichte-Maximum der mittel- und/oder langwellige IR-Strahlung bei Wellenlängen im Bereich von 2,0 bis 9,0 µm, besonders bevorzugt zwischen 2,0 und 6 µm ist.

4. Verfahren nach einem der Ansprüche 1 bis 3, **dadurch gekennzeichnet, dass** das im Pulverlack enthaltene Additiv mit der Eigenschaft, die mittel- und/oder langwellige IR-Strahlung zu absorbieren, Antimon-Zinn-Oxid und/oder Indium-Zinn-Oxid ist.

5. Verfahren nach einem der Ansprüche 1 bis 3, **dadurch gekennzeichnet, dass** die im Pulverlack enthaltenen Additive mit der Eigenschaft, die mittel- und/oder langwellige IR-Strahlung zu absorbieren, C-Nanotubes und/oder C-Nanofibres sind.

6. Verfahren nach Anspruch 5, **dadurch gekennzeichnet, dass** die C-Nanotubes und/oder C-Nanofibres in einer Menge im Bereich von 0,01 Gew.- % bezogen auf die Pulverlack-Gesamtformulierung enthalten sind.

7. Verfahren nach einem der Ansprüche 1 bis 3, **dadurch gekennzeichnet, dass** die im Pulverlack enthaltenen Additive mit der Eigenschaft, die mittel- und/oder langwellige IR-Strahlung zu absorbieren, Seltenerderrtetalle und/oder Oxide der Seltenerdemetalle oder Mischungen hiervon sind.

8. Verfahren nach Anspruch 7, **dadurch gekennzeichnet, dass** Ytterbiumoxid und/oder Neodymoxid im Pulverlack als Additive mit der Eigenschaft, die mittel- und/oder langwellige IR-Strahlung zu absorbieren, enthalten sind.

9. Verfahren nach Anspruch 8, **dadurch gekennzeichnet, dass** Ytterbiumoxid und/oder Neodymoxid im Pulverlack in einer Menge von je 2,5 Gew.- % bezogen auf die Pulverlack-Gesamtformulierung enthalten sind.

10. Verfahren nach einem der Ansprüche 1 bis 9, **dadurch gekennzeichnet, dass** das Substrat, auf dem der applizierte Pulverlack mit der mittel- und/oder langwelliger IR-Strahlung bestrahlt wird, dreidimensional ist.

11. Verfahren nach einem der Ansprüche 1 bis 10, **dadurch gekennzeichnet, dass** das Substrat, auf dem der applizierte Pulverlack mit der mittel- und/oder langwelliger IR-Strahlung bestrahlt wird, aus thermisch isolierendem Material mit einer Wärmeleitfähigkeit zwischen 0,05 und 5 W/mK ist.

12. Verfahren nach einem der Ansprüche 1 bis 11, **dadurch gekennzeichnet, dass** das Substrat, auf dem der applizierte Pulverlack mit der mittel- und/oder langwelliger IR-Strahlung bestrahlt wird, aus hitzeempfindlichem Material ist.

## Claims

1. Method of heat-treating powder coating materials of any shade applied to substrates for the purpose of producing a coating on the substrates using IR radiation, **characterized in that** the powder coating material applied to the substrate is irradiated with medium-wave and/or long-wave IR radiation having a wavelength range of 2 to 12 µm and **in that** the powder coating material comprises additives having the capacity to absorb medium-wave and/or long-wave IR radiation and **in that**, if desired, the powder coating material heat-treated with medium-wave and/or long-wave IR radiation is subjected to a further treatment with electronic or UV radiation.

2. Method according to Claim 1, **characterized in that** the medium-wave and/or long-wave IR radiation has a radiation flux density maximum at wavelengths > 2.0 µm.

3. Method according to Claim 2, **characterized in that** the radiation flux density maximum of the medium-wave and/or long-wave IR radiation is at wavelengths in the range from 2.0 to 9.0 µm, with particular preference between 2.0 and 6 µm.

4. Method according to any one of Claims 1 to 3, **characterized in that** the additive present in the powder coating material that has the capacity to absorb the medium-wave and/or long-wave IR radiation is antimony tin oxide and/or indium tin oxide.

5. Method according to any one of Claims 1 to 3, **characterized in that** the additives present in the powder coating material that have the capacity to absorb the medium-wave and/or long-wave IR radiation are C nanotubes and/or C nanofibres.

6. Method according to Claim 5, **characterized in that** the C nanotubes and/or C nanofibres are present in an amount in the region of 0.01% by weight, based on the overall powder coating formulation.

7. Method according to any one of Claims 1 to 3, **characterized in that** the additives present in the powder coating material that have the capacity to absorb the medium-wave and/or long-wave IR radiation are rare earth metals and/or oxides of rare earth metals or mixtures thereof.

8. Method according to Claim 7, **characterized in that** ytterbium oxide and/or neodymium oxide are present in the powder coating material as additives having the capacity to absorb medium-wave and/or long-wave IR radiation.

9. Method according to Claim 8, **characterized in that** ytterbium oxide and/or neodymium oxide are present in the powder coating material in an amount of in each case 2.5% by weight, based on the overall powder coating formulation.

10. Method according to any one of Claims 1 to 9, **characterized in that** the substrate on which the applied powder coating material is irradiated with the medium-wave and/or long-wave IR radiation is three-dimensional.

11. Method according to any one of Claims 1 to 10, **characterized in that** the substrate on which the applied powder coating material is irradiated with the medium-wave and/or long-wave IR radiation is of thermally insulating material having a thermal conductivity of between 0.05 and 5 W/mK.

12. Method according to any one of Claims 1 to 11, **characterized in that** the substrate on which the applied powder coating material is irradiated with the medium-wave and/or long-wave IR radiation is of heat-sensitive material.

## Revendications

1. Procédé de traitement thermique de peintures en poudre appliquées sur des substrats, de teintes quelconques en vue de produire un revêtement sur les substrats en utilisant un rayonnement infrarouge, **caractérisé en ce que** la peinture en poudre appliquée sur le substrat est irradiée par un rayonnement infrarouge à ondes moyennes et/ou ondes longues avec une gamme d'ondes comprise entre 2 et 12 µm et **en ce que** la peinture en poudre contient des additifs présentant la propriété d'absorber le rayonnement infrarouge à ondes moyennes et/ou ondes longues et **en ce qu'**éventuellement, la peinture en poudre traitée thermiquement à l'aide du rayonnement infrarouge à ondes moyennes et/ou ondes longues est soumise à un autre traitement comportant un rayonnement électronique ou UV.

2. Procédé selon la revendication 1, **caractérisé en ce que** le rayonnement infrarouge à ondes moyennes et/ou ondes longues présente un maximum d'intensité du flux de rayonnement pour des longueurs d'ondes > 2,0 µm.

3. Procédé selon la revendication 2, **caractérisé en ce que** le maximum d'intensité du flux du rayonnement infrarouge à ondes moyennes et/ou ondes longues pour des longueurs d'ondes est compris dans la plage entre 2,0 et 9,0 µm, mieux encore entre 2,0 et 6 µm.

4. Procédé selon l'une quelconque des revendications 1 à 3, **caractérisé en ce que** l'additif contenu dans la peinture en poudre présentant la propriété d'absorber le rayonnement infrarouge à ondes moyennes et/ou ondes longues, est un oxyde d'antimoine et d'étain et/ou un oxyde d'indium et d'étain.

5. Procédé selon l'une quelconque des revendications 1 à 3, **caractérisé en ce que** les additifs contenus dans la peinture en poudre présentant la propriété d'absorber le rayonnement infrarouge à ondes moyennes et/ou ondes longues, sont des nanotubes C et/ou des nanofibres C.

6. Procédé selon la revendication 5, **caractérisé en ce que** les nanotubes C et/ou les nanofibres C sont contenues dans une quantité dans la plage de 0,01 % en poids, sur base de la formulation totale de la peinture en poudre.

7. Procédé selon l'une quelconque des revendications 1 à 3, **caractérisé en ce que** les additifs contenus dans la peinture en poudre présentant la propriété d'absorber le rayonnement infrarouge à ondes moyennes et/ou ondes longues, sont des métaux des terres rares et/ou des oxydes de métaux des terres rares ou des mélanges de ceux-ci.

8. Procédé selon la revendication 7, **caractérisé en ce que** l'oxyde d'ytterbium et/ou l'oxyde de néodyme est contenu dans la peinture en poudre comme additifs présentant la propriété d'absorber le rayonnement infrarouge à ondes moyennes et/ou ondes longues.

9. Procédé selon la revendication 8, **caractérisé en ce que** l'oxyde d'ytterbium et/ou l'oxyde de néodyme est contenu dans la peinture en poudre dans une quantité de 2,5 % en poids chacun, sur base de la formulation totale de la peinture en poudre.

10. Procédé selon l'une quelconque des revendications 1 à 9, **caractérisé en ce que** le substrat, sur lequel la peinture en poudre appliquée est irradiée par le rayonnement infrarouge à ondes moyennes et/ou ondes longues, est tridimensionnel.

11. Procédé selon l'une quelconque des revendications 1 à 10, **caractérisé en ce que** le substrat, sur lequel la peinture en poudre appliquée est irradiée par le rayonnement infrarouge à ondes moyennes et/ou ondes longues, est composé d'un matériau thermoisolant doté d'une conductibilité thermique comprise entre 0,05 et 5 W/mK.

12. Procédé selon l'une quelconque des revendications 1 à 11, **caractérisé en ce que** le substrat, sur lequel la peinture en poudre appliquée est irradiée par le rayonnement infrarouge à ondes moyennes et/ou ondes longues, est composé d'un matériau thermosensible.
